# FASCICULE DE BREVET EUROPEEN

(11) **EP 1 889 753 B1**
(45) Date de publication et mention de la délivrance du brevet: **28.11.2012**
(21) Numéro de dépôt: 07301223.9
(22) Date de dépôt: 11.07.2007
(51) Int. Cl.: B60R 19/48

(54) **Pare-chocs de véhicule automobile comprenant un capteur et une entretoise formant raidisseur**
Stoßstange eines Kraftfahrzeugs, das einen Sensor und einen Abstandhalter umfasst, ein Versteifungsglied bildend
Automobile bumper containing a sensor and a spacer forming stiffener.

(30) Priorité: 17.08.2006 FR 0653392
(43) Date de publication de la demande: 20.02.2008
(73) Titulaire: PEUGEOT CITROËN AUTOMOBILES S.A., 78140 Vélizy Villacoublay (FR)
(72) Inventeur: Meresse, Ludovic, 25200 Montbeliard (FR); Beaudoin, Olivier, 25490 Dampierre les Bois (FR)

(56) Documents cités:
- FR-A1- 2 851 969
- JP-A- 10 044 891
- JP-A- 2006 199 145
- US-B1- 6 902 215

## Description

L'invention concerne un véhicule automobile comprenant un pare-chocs incluant une peau disposée en avant d'un élément de structure tel qu'une poutre transversale de la structure du véhicule, et un capteur monté entre l'élément de structure et la peau. Le capteur peut par exemple être un capteur d'aide au stationnement.

L'invention est destinée à l'amélioration des conséquences d'un choc piéton durant lequel la jambe d'un piéton entre en collision avec un tel pare-chocs, en étant située au niveau du capteur d'aide au stationnement.

En cas de choc frontal avec un piéton, la peau du pare-chocs qui est fabriquée dans une matière plastique souple s'écrase en se rapprochant de la poutre transversale pour absorber le choc afin de diminuer l'importance des lésions provoquées sur la jambe du piéton.

Le capteur d'aide au stationnement qui est monté entre la peau et la poutre transversale se présente sous forme d'un boîtier rigide.

Ainsi, en cas de choc piéton au niveau du capteur d'aide au stationnement, en fin de choc, la jambe du piéton se retrouve en partie en appui sur le capteur, par l'intermédiaire de la peau, ce capteur étant lui-même en appui sur la poutre transversale et en partie en appui contre la poutre transversale par l'intermédiaire de la peau.

Compte tenu de la forte rigidité du capteur, cette situation conduit à des lésions importantes au niveau de la jambe.

Le document JP 2006 199 145 A décrit un véhicule automobile selon le préambule de la revendication 1.

Le but de l'invention est de remédier à cet inconvénient en proposant une solution simple pour limiter les conséquences d'un choc piéton dans le cas d'un véhicule équipé d'un capteur et notamment d'un capteur d'aide au stationnement.

A cet effet, l'invention a pour objet un véhicule automobile comprenant un pare-chocs incluant une peau disposée en avant d'un élément de structure tel qu'une poutre transversale de la structure du véhicule, et un capteur monté entre l'élément de structure et la peau, comprenant en outre une entretoise montée entre la peau et l'élément de structure au dessus ou au dessous du capteur, caractérisé en ce que l'entretoise comprend une platine et un boîtier porté par cette platine, la platine étant orientée face à une surface interne de la peau, le boîtier s'étendant vers l'élément de structure.

L'invention concerne également un véhicule tel que défini ci-dessus, comprenant une grille située entre la peau et l'élément de structure, et dans lequel l'entretoise est fixée à cette grille.

L'invention concerne également un véhicule tel que défini ci-dessus, comprenant un absorbeur de choc interposé entre la peau et l'élément de structure, et dans lequel l'entretoise est montée à hauteur de l'absorbeur de choc.

L'invention concerne également un véhicule tel que défini ci-dessus, dans lequel l'entretoise est engagée dans une ouverture avant de l'absorbeur de choc.

L'invention concerne également un véhicule tel que défini ci-dessus, dans lequel l'entretoise a une longueur sensiblement identique à celle du capteur selon l'axe longitudinal du véhicule.

L'invention concerne également un véhicule tel que défini ci-dessus, dans lequel l'entretoise a une longueur supérieure à celle du capteur selon l'axe longitudinal du véhicule.

L'invention concerne également un véhicule tel que défini ci-dessus, dans lequel l'entretoise comprend une ouverture centrale de fixation dans laquelle est engagé un plot de fixation solidaire du support auquel l'entretoise est fixée.

L'invention concerne également un véhicule tel que défini ci-dessus, dans lequel la rigidité de l'entretoise est adaptée de façon à ce qu'elle soit sensiblement égale à celle du capteur.

L'invention concerne également un véhicule tel que défini ci-dessus, comprenant un capteur d'aide au stationnement.

L'invention sera maintenant décrite plus en détail, et en référence aux figures annexées.
La figure 1 est une représentation schématique d'une situation de choc piéton au niveau du capteur d'aide au stationnement avec un véhicule de l'Etat de la technique ;
La figure 2 est une représentation schématique d'une situation de choc piéton au niveau du capteur d'aide au stationnement avec un véhicule équipé d'une entretoise selon l'invention ;
La figure 3 est une vue d'un véhicule équipé d'une entretoise dans un plan de coupe longitudinal situé au niveau du capteur d'aide au stationnement ;
La figure 4 montre l'entretoise montée dans un pare-chocs ;
La figure 5 montre la déformation du pare-chocs en cas de choc piéton avec un véhicule équipé d'une entretoise conforme à l'invention.

L'idée à la base de l'invention réside dans le constat selon lequel un capteur, situé au niveau du pare-chocs d'un véhicule, constitue un point dur qui est local, de sorte qu'à l'issue d'un choc durant lequel la jambe du piéton heurte le pare-chocs au niveau du capteur, la jambe est confrontée à un pare-chocs ayant des raideurs différentes à hauteur du fémur, de la rotule, et du tibia.

Ces différentes raideurs se traduisent par une sollicitation du genou en cisaillement, car les efforts subis par le fémur et le tibia ont des intensités différentes. Cette différence d'effort peut de plus engendrer une flexion inverse du genou.

Ainsi, la présence du capteur d'aide au stationnement constitue une source de blessures importantes de la jambe, non pas du fait que ce capteur a en soi une raideur importante, mais du fait que sa raideur introduit des différences de raideurs dans les différentes zones du pare-chocs.

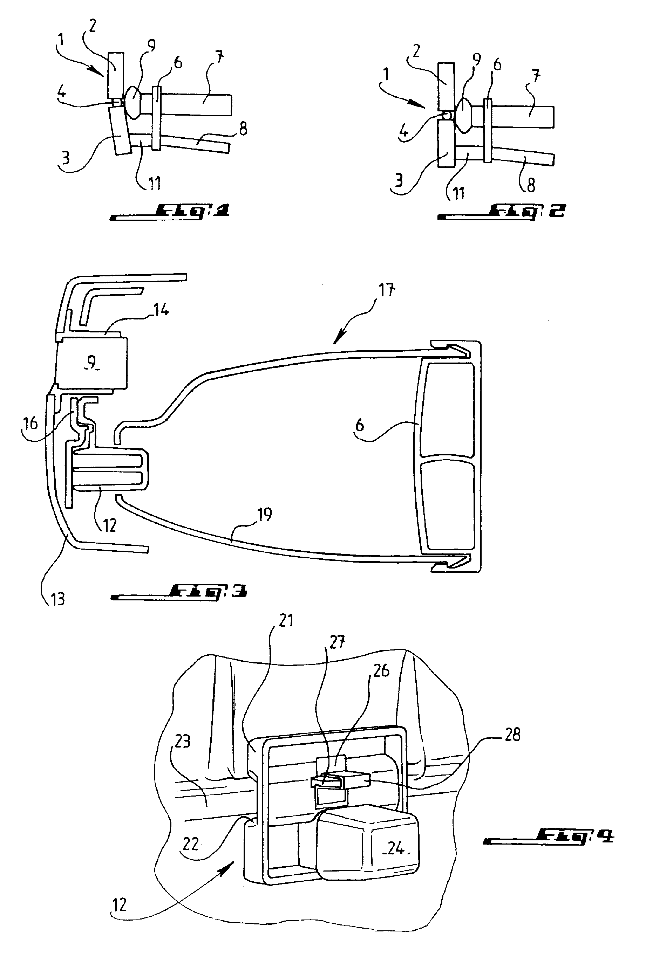

Dans les figures 1 et 2, on a représenté symboliquement les positions relatives de la jambe et de constituants du pare-chocs contre lesquels elle est en appui à l'issue d'un choc, c'est-à-dire lorsque ces éléments ont été compressés ou emboutis sous l'effet du choc.

La jambe du piéton est repérée par 1, son tibia et son fémur étant repérés respectivement par 2 et 3, et son genou étant repéré par 4. Cette jambe est en appui contre la peau du pare-chocs qui n'est pas représentée dans les figures 1 et 2, cette peau étant alors située entre la jambe et les éléments intermédiaires situés en avant d'une poutre transversale 6.

Cette poutre 6 est sensiblement le premier élément de structure métallique transversal situé en arrière du pare-chocs avant du véhicule, les éléments du pare-chocs se déformant en se rapprochant de cette poutre en cas de choc.

On a également représenté symboliquement des éléments 7 et 8 de la structure du véhicule qui supportent la poutre 6 en étant situés en arrière de celle-ci. Le capteur d'aide au stationnement 9 qui constitue l'un des éléments intermédiaires est situé en avant de cette poutre 6, et dans l'exemple des figures il est placé à une hauteur correspondant à celle du genou 4, mais il peut également être disposé à une hauteur correspondant à celle du fémur.

Dans ces figures, un rectangle repéré par 11 représente d'autres éléments intermédiaires situés entre la peau de pare-chocs et la poutre transversale 6, mais sous le capteur 9, c'est-à-dire à hauteur du tibia dans l'exemple des figures.

Ces autres éléments intermédiaires 11 sont par exemple des organes placés dans le pare-chocs tels qu'une garniture interne ou une grille de style qui constituent après enfoncement de la peau, une partie ayant une raideur différente de celle du capteur d'aide au stationnement et située sous ce capteur.

Dans la figure 1 qui est représentative d'un pare-chocs de l'Etat de la technique le capteur 9 et les éléments intermédiaires 11 ont des longueurs différentes après enfoncement du pare-chocs, ce qui est représentatif de leurs raideurs différentes.

Ainsi, dans ce cas, le capteur 9 a une raideur supérieure à celle des éléments 11. La présence de ce capteur 9 constitue un point d'appui pour le fémur ou le genou, alors que le tibia ne possède pas de point d'appui de raideur comparable.

En d'autres termes, durant un choc, les éléments 11 se compressent plus que le capteur 9, de sorte que le fémur 2 ou le genou 4 est soumis à un effort supérieur à l'effort auquel est soumis le tibia 3. Comme illustré sur la figure 1, cette situation provoque une sollicitation du genou 4 en cisaillement dans un plan horizontal, en même temps qu'une flexion inverse de ce genou.

Comme montré sur la figure 2, le fait d'intégrer, conformément à l'invention, une entretoise aux éléments intermédiaires 11 permet de rendre la raideur du pare-chocs homogène au niveau du capteur.

En d'autres termes, l'entretoise constitue un point d'appui pour le tibia qui est comparable au point d'appui que forme le capteur pour le fémur ou le genou, de sorte que le genou n'est pas sollicité en cisaillement durant un choc. Grâce à cette entretoise, le fémur 2 ou le genou 4 et le tibia 3 s'enfoncent de la même valeur dans le pare-chocs durant un choc piéton.

Comme visible sur la figure 2, en fin de choc, le fémur 2 et le tibia 3 sont encore dans le prolongement l'un de l'autre, de sorte que le genou 4 n'est sollicité ni en flexion, ni en cisaillement.

Le pare-chocs comprenant l'entretoise selon l'invention est représenté en coupe dans la vue de la figure 3, en étant repérée par 12. Cette entretoise est interposée entre la peau de pare-chocs avant repérée par 13 et la poutre transversale 6 en étant située sous le capteur 9.

Dans l'exemple de la figure 3, ce capteur 9 est fixé à une face interne de la peau 13 grâce à un support 14, et au niveau d'une ouverture de la peau, de telle manière que ce capteur 9 a une face qui débouche directement vers l'avant du véhicule à travers l'ouverture.

Une grille 16 est également montée sensiblement contre la face interne de la peau 13, l'entretoise 12 étant ici directement fixée à une face interne de cette grille 16.

Ce pare-chocs comprend également un absorbeur de chocs 17, dédié au choc piéton, situé entre la peau 13 et la poutre 6, à hauteur de l'entretoise 12.

Cet absorbeur de chocs 17 comprend une pièce déformable 19 située à même hauteur que la poutre 6 en étant située longitudinalement entre cette poutre 6 et la grille 16. L'absorbeur 17 est fixé sur la poutre 6.

Durant un choc, la peau 13 vient en appui sur l'extrémité avant de la pièce déformable 19. Ensuite, cette pièce déformable 19 se comprime selon la direction longitudinale pour absorber de manière progressive l'énergie du choc.

Ainsi, les éléments intermédiaires repérés par 11 dans les figures 1 et 2 comprennent notamment la grille 16, et l'absorbeur de choc 17 avec sa pièce déformable 19.

Dans le cas de la figure 2 qui correspond à l'invention, ces éléments incluent également l'entretoise 12 qui augmente la rigidité de ces éléments intermédiaires 11 pour l'équilibrer avec la rigidité introduite par le capteur 9.

L'entretoise 12 constitue ainsi un point dur ayant une rigidité et une longueur comparables, voire identiques, à la rigidité et à la longueur du capteur 9.

Cette entretoise peut se présenter sous forme d'une pièce en matière plastique injectée, par exemple en polypropylène, ayant une forme générale de boîtier destiné à être fixé à l'un des éléments internes du pare choc, comme c'est le cas dans l'exemple de la figure 4. La rigidité de l'entretoise est adaptée de façon à ce que sa rigidité soit similaire à celle du capteur 9.

Cette entretoise a plus particulièrement une face avant de contour rectangulaire formant une platine 21 et destinée à venir directement ou indirectement en appui sur la peau 13 durant un choc. Cette platine permet de maintenir l'entretoise 12 dans une orientation prédéterminée au cours d'un choc, c'est-à-dire durant la déformation du peau 13 et des autres éléments constitutifs du pare-chocs.

La platine comprend au niveau de sa face avant un renfoncement 22 ou rail destiné à la bloquer verticalement à l'élément auquel elle est fixée, cet élément comprenant un relief rectiligne 23 ayant une forme complémentaire à celle du renfoncement 22.

Le relief 23 peut faire partie de la grille 16 dans le cas où cette entretoise est fixée à cette grille, ou bien aussi être prévu à la face interne de la peau 13 pour fixer l'entretoise 12 directement à la peau.

Comme visible dans la figure 4, l'entretoise comprend également un boîtier 24 généralement parallélépipédique, formant surépaisseur, et qui dépasse de la face interne de la platine 21, c'est-à-dire de la face orientée vers la poutre 6.

L'épaisseur ou longueur de ce boîtier 24, le long de l'axe longitudinal du véhicule correspond sensiblement à la longueur du capteur 9 selon l'axe longitudinal. La longueur du boîtier 24 peut également être supérieure à celle du capteur 9, dans ce cas, le boîtier 24 possède une partie déformable.

La platine comprend également une ouverture de fixation 26 située au niveau du rail 22, le boîtier 24 étant situé sensiblement sous le rail 22. L'ouverture 26 est destinée à recevoir un plot de fixation, repéré par 27, qui est solidaire de l'élément auquel l'entretoise est fixée tout en dépassant longitudinalement de la face interne de cet élément de manière à être engagé dans l'ouverture 26.

La fixation de l'entretoise 12 peut ainsi simplement consister à engager cette entretoise 12 sur le plot 27 pour qu'il traverse l'ouverture 26, puis à monter une agrafe 28 sur ce plot 27 pour bloquer l'entretoise en position.

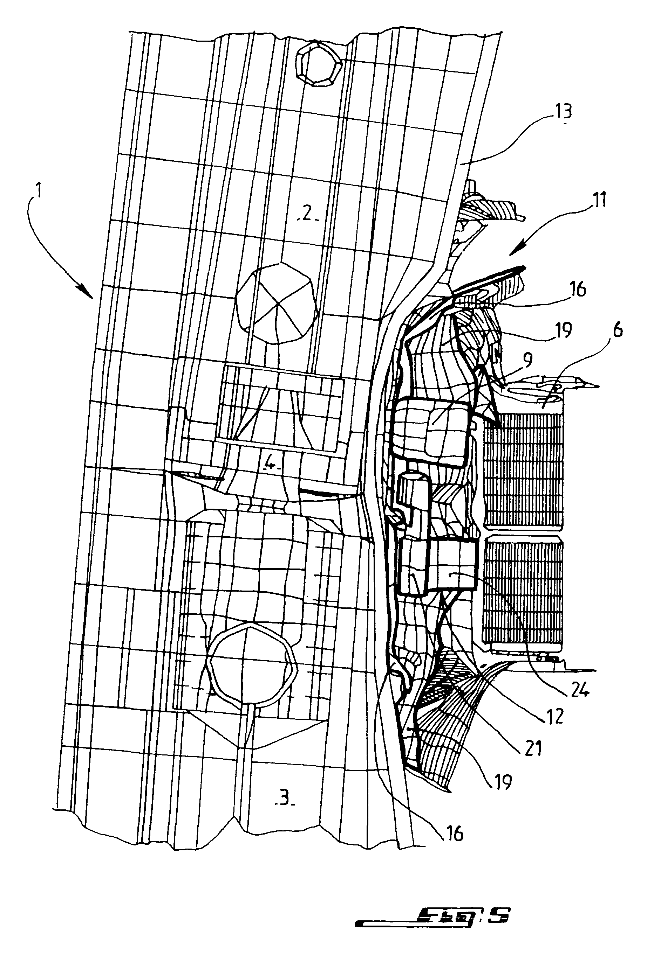

L'état du pare-chocs après un choc piéton est représenté dans la vue en coupe de la figure 5, qui montre notamment le déplacement de la peau 13 lorsqu'elle est embouti par la jambe 1 du piéton.

Dans le cas illustré sur cette figure, le capteur 9 est situé à hauteur du fémur 2, juste au dessus du genou, et l'entretoise 12 est située au niveau du tibia légèrement sous le genou 4.

Grâce à la présence de l'entretoise 12 qui est réalisée dans une matière plastique ayant une rigidité sensiblement identique à celle du capteur 9, le tibia 3 reste dans le prolongement du fémur 2 jusqu'à la fin du choc, de sorte que le genou n'est pas sollicité en cisaillement, ce qui minimise ses blessures.

Ainsi, durant le choc, la peau vient en appui sur la pièce déformable 19, ce qui provoque la déformation de cette pièce déformable qui s'aplatit pour atteindre l'état représenté en figure 5.

Comme représenté en figure 3, l'entretoise peut avantageusement être partiellement engagée dans une ouverture avant de la partie déformable 19 de l'absorbeur de choc 17, le boîtier 24 étant engagé dans cette ouverture qui a alors des dimensions légèrement inférieures à celles du contour de la platine 21.

Grâce à cette disposition, le maintien de l'orientation de l'entretoise est améliorée durant le choc, comme visible dans la figure 5 montrant en coupe les différents éléments constitutifs du pare-chocs déformés après un choc.

Plus particulièrement, comme le montre cette figure, la platine 21 de l'entretoise se maintient en appui contre la peau 13, de sorte que le boîtier 24 reste orienté horizontalement pour assurer que la longueur de l'entretoise, reste comparable à celle du capteur 9 à l'issue du choc.

Les différents exemples illustrés sur les figures correspondent à un véhicule équipé d'un capteur monté à hauteur du genou ou d'une partie inférieure du fémur. Mais l'invention s'applique également à un cas dans lequel le capteur est monté à hauteur du tibia, l'entretoise devant alors être montée au dessus du capteur de manière à homogénéiser la raideur du pare-chocs.

Selon une variante de l'invention, l'entretoise 12 peut être venue de matière avec le support 14 permettant la fixation du capteur 9.

Ainsi, l'entretoise selon l'invention constitue une pièce de faibles dimensions pouvant donc facilement être intégrée à une structure générale existante de pare-chocs. Elle permet de réduire significativement les conséquences pour la jambe d'un choc au droit du capteur d'aide au stationnement.

Bien sûr, l'entretoise s'applique en complément de tout type de capteur disposé entre la peau de pare-chocs 13 et la poutre transversale 6 et possédant une raideur importante.

## Revendications

1. Véhicule automobile comprenant un pare-chocs incluant une peau (13) disposée en avant d'un élément de structure tel qu'une poutre transversale (6) de la structure du véhicule, et un capteur (9) monté entre l'élément de structure (6) et la peau (13) et comprenant une entretoise (12) montée entre la peau (13) et l'élément de structure (6) au dessus ou au dessous du capteur (9), **caractérisé en ce que** ladite entretoise (12) comprend une platine (21) et un boîtier (24) porté par cette platine, la platine étant orientée face à une surface interne de la peau (13), le boîtier s'étendant vers l'élément de structure (6).

2. Véhicule selon la revendication 1, comprenant une grille (16) située entre la peau (13) et l'élément de structure (6), et dans lequel l'entretoise (12) est fixée à cette grille (16).

3. Véhicule selon l'une des revendications 1 à 2, comprenant un absorbeur de choc (17) interposé entre la peau (13) et l'élément de structure(6), et dans lequel l'entretoise (12) est montée à hauteur de l'absorbeur de choc (17).

4. Véhicule selon la revendication 3, dans lequel l'entretoise (12) est engagée dans une ouverture avant de l'absorbeur de choc (17).

5. Véhicule selon l'une des revendications 1 à 4, dans lequel l'entretoise (12) a une longueur sensiblement identique à celle du capteur (9) selon l'axe longitudinal du véhicule.

6. Véhicule selon l'une des revendications 1 à 4, dans lequel l'entretoise (12) a une longueur supérieure à celle du capteur (9) selon l'axe longitudinal du véhicule.

7. Véhicule selon l'une des revendications 1 à 6, dans lequel l'entretoise (12) comprend une ouverture centrale (26) de fixation dans laquelle est engagé un plot (27) de fixation solidaire du support auquel l'entretoise (12) est fixée.

8. Véhicule selon l'une des revendications 1 à 7, dans lequel la rigidité de l'entretoise (12) est adaptée de façon à ce qu'elle soit sensiblement égale à celle du capteur (9).

9. Véhicule selon l'une des revendications 1 à 8, comprenant un capteur d'aide au stationnement

## Claims

1. Motor vehicle comprising a bumper including a skin (13) placed in front of a structure element such as transverse beam (6) of the structure of the vehicle, and a sensor (9) mounted between the structure element (6) and the skin (13) and comprising a strut (12) mounted between the skin (13) and the structure element (6) above or below the sensor (9), **characterised in that** said strut (12) comprises a plate (21) and a housing (24) carried by this plate, the plate being oriented facing an internal surface of the skin (13), the housing extending towards the structure element (6).

2. Vehicle according to claim 1, comprising a grille (16) situated between the skin (13) and the structure element (6), and in which the strut (12) is fixed to this grille (16).

3. Vehicle according to one of claims 1 to 2, comprising a shock absorber (17) interposed between the skin (13) and the structure element (6), and in which the strut (12) is mounted level with the shock absorber (17).

4. Vehicle according to claim 3, in which the strut (12) is engaged in a front opening of the shock absorber (17).

5. Vehicle according to one of claims 1 to 4, in which the strut (12) has a length substantially identical to that of the sensor (9) along the longitudinal axis of the vehicle.

6. Vehicle according to one of claims 1 to 4, in which the strut (12) has a length greater than that of the sensor (9) along the longitudinal axis of the vehicle.

7. Vehicle according to one of claims 1 to 6, in which the strut (12) comprises a central fixing opening (26) in which a fixing stud (27) is engaged, secured to the support to which the strut (12) is fixed.

8. Vehicle according to one of claims 1 to 7, in which the rigidity of the strut (12) is adapted so that it is substantially equal to that of the sensor (9).

9. Vehicle according to one of claims 1 to 8, comprising a parking-aid sensor.

## Patentansprüche

1. Kraftfahrzeug umfassend einen Stoßfänger mit einer Hülle (13), die vor einem Strukturelement, wie einem Querträger (6), der Fahrzeugstruktur angeordnet ist, und einen Sensor (9) der zwischen dem Strukturelement (6) und der Hülle (13) montiert ist, und umfassend ein Distanzstück (12), das zwischen der Hülle (13) und dem Strukturelement (6) oberhalb oder unterhalb des Sensors (9) montiert ist, **dadurch gekennzeichnet, dass** das besagte Distanzstück (12) eine Platine (21) und ein Gehäuse (24) umfasst, das von dieser Platine getragen wird, wobei die Platine gegenüber einer Innenfläche der Hülle (13) ausgerichtet ist, und sich das Gehäuse in Richtung des Strukturelements (6) erstreckt.

2. Fahrzeug nach Anspruch 1, umfassend ein Gitter (16), die zwischen der Hülle (13) und dem Strukturelement (6) angeordnet ist, und in dem das Distanzstück (12) auf diesem Gitter (16) befestigt ist.

3. Fahrzeug nach einem der Ansprüche 1 bis 2, umfassend einen Anpralldämpfer (17), der zwischen der Hülle (13) und dem Strukturelement (6) eingebaut ist, und bei dem das Distanzstück (12) auf Höhe des Anpralldämpfers (17) montiert ist.

4. Fahrzeug nach Anspruch 3, bei dem das Distanzstück (12) in eine vordere Öffnung des Anpralldämpfers (17) eingeführt ist.

5. Fahrzeug nach einem der Ansprüche 1 bis 4, bei dem das Distanzstück (12) eine in etwa identische Länge aufweist, wie der Sensor (9) in der Längsachse des Fahrzeugs.

6. Fahrzeug nach einem der Ansprüche 1 bis 4, bei dem das Distanzstück (12) eine größere Länge aufweist, als der Sensor (9) in der Längsachse des Fahrzeugs.

7. Fahrzeug nach einem der Ansprüche 1 bis 6, bei dem das Distanzstück (12) eine mittlere Befestigungsöffnung (26) umfasst, in die ein Befestigungsstift (27) zur kraftschlüssigen Befestigung der Halterung eingebunden ist, auf der das Distanzstück (12) befestigt ist.

8. Fahrzeug nach einem der Ansprüche 1 bis 7, bei dem die Steifigkeit des Distanzstücks (12) so angepasst ist, dass sie in etwa gleich jener des Sensors (9) ist.

9. Fahrzeug nach einem der Ansprüche 1 bis 8, umfassend einen Sensor zur Einparkhilfe.
